(19) Europäisches Patentamt
European Patent Office
Office européen des brevets

(11) **EP 2 257 072 A1**

(12) **EUROPEAN PATENT APPLICATION**

(43) Date of publication:
**01.12.2010 Bulletin 2010/48**

(51) Int Cl.:
***H04N 7/26*** (2006.01)

(21) Application number: **09161255.6**

(22) Date of filing: **27.05.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(71) Applicant: **NXP B.V.
5656 AG Eindhoven (NL)**

(72) Inventors:
• **Eerenberg, Onno
Redhill, Surrey RH1 1DL (GB)**

• **van Roermund, Timo
Redhill, Surrey RH1 1DL (GB)**
• **Trauschke, Erik
Redhill, Surrey RH1 1DL (GB)**

(74) Representative: **Williamson, Paul Lewis
NXP Semiconductors
IP Department
Betchworth House
57-65 Station Road
Redhill
Surrey RH1 1DL (GB)**

(54) **Image and video coding**

(57)    A method of encoding an image block. The method comprises: performing a Discrete Cosine Transform on the image block to produce a set of DCT coefficients; selecting a subset of the coefficients according to a pattern chosen from a plurality of predetermined patterns, the choice of pattern depending upon the content of the image block; and retaining the selected subset of coefficients and discarding all other coefficients.

FIG. 9

EP 2 257 072 A1

## Description

This invention relates to encoding and decoding images or frames of a video. In particular, it relates to coding schemes which use a Discrete Cosine Transform (DCT) to compress image content.

DCT-based coding methods are widespread in the field of image coding and the neighbouring field of video coding. For example, the ISO/IEC Joint Photographic Experts Group (JPEG) has defined image compression standards based on DCT encoding. Likewise, the Moving Picture Experts Group (MPEG) has standardised various video coding techniques based on the DCT - including MPEG-4 Part 10: Advanced Video Coding (AVC), also known as H.264.

These coding methods are based on the observation that the discrete cosine transform of a sub-block of an image tends to exhibit "energy compaction", in that a small number of the DCT coefficients account for most of the energy of the image function. In particular, for natural images, the larger amplitude coefficients are found at lower frequencies.

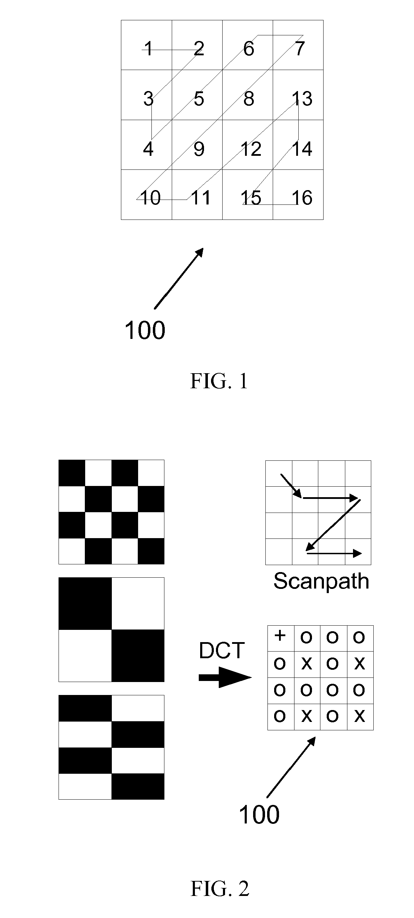

In most DCT compression schemes, such as JPEG and H.264, the coefficients are collected (concatenated) according to the zig-zag scan path shown in Fig. 1. Coefficients that are zero are skipped, by encoding them instead with a run-value. The run-value indicates the number of zeros before the next non-zero coefficient in the scan path. To obtain a higher compression ratio, quantization can be applied before collecting the coefficients. This reduces the number of bits used to encode each coefficient, and also has the effect that many low-amplitude, higher frequency coefficients are quantized to zero. The higher the number of coefficients that are zero, the higher the compression ratio will be. Masking characteristics of the Human Visual System (HVS) may be exploited by quantizing high-frequency coefficients more heavily than low-frequency coefficients.

By following the zig-zag scan shown in Fig. 1, the non-zero coefficients are generally clustered at the beginning of the scan path whereas the zero coefficients are clustered at the end of the scan path. The coefficients on the scan path are encoded using so-called "run-level" code words, consisting of a run value indicating the next non-zero coefficient in the scan path and a level value indicating the amplitude of that coefficient. By clustering the non-zero coefficients, the amplitude of the run values is kept minimal, which results in shorter code words.

Although the zig-zag pattern is the most commonly used, other scan paths for traversing the coefficients in a DCT block have also been proposed.

According to one aspect of the invention, there is provided a method of encoding an image block comprising: performing a Discrete Cosine Transform, hereinafter DCT, on the image block to produce a set of DCT coefficients; selecting a subset of the coefficients according to a pattern chosen from a plurality of predetermined patterns, the choice of pattern depending upon the content of the image block; and retaining the selected subset of coefficients and discarding all other coefficients.

According to an aspect of the invention, there is provided a method of encoding an image block comprising: performing a DCT on the image block to produce a set of DCT coefficients; choosing a pattern from a plurality of predetermined patterns, depending upon the content of the image block; selecting a subset of the DCT coefficients according to the pattern; and retaining the selected subset of coefficients and discarding all other coefficients.

This method can be applied to a still image or, equally, to an image that is a frame in a video sequence. That is, it is applicable to both image and video coding. The method uses a plurality of predetermined patterns, each of which is designed to be optimised for a given type of image-block content. Depending on the content of the block, the pattern best adapted to that content is chosen. Each pattern includes only a subset of the DCT coefficients in the DCT transformed block. That is, each pattern defines a fixed scheme, which selects (retains) one predetermined subset of DCT coefficients and discards another predetermined subset. This results in a reduced number of DCT coefficients being retained for encoding, leading to improved compression ratios. Thus, instead of merely defining a scan pattern for ordering the coefficients, or a quantization scheme which increases the likelihood of zero-valued coefficients, the present method actually pre-ordains a fixed subset of the coefficients which are retained for any given pattern. The signalling associated with these fixed patterns can be very simple and so the overhead of using this coding scheme can be small. Typically, the predetermined subset of coeffcients retained in a given pattern will not be from a single, contiguous (two-dimensional) region in the DCT block. Even more often, the predetermined subset will not be contiguous in one dimension, along a conventional, zig-zag scan path. Non-contiguous patterns of DCT coefficients are particularly inefficiently coded by conventional run-level coding on a zig-zag scan, because runs of zeros are interrupted by non-zero values (and vice versa). By choosing a predetermined subset of coefficients in advance, the present invention may also avoid the need to provide an "end-of-block" signal, which is used to accommodate a variable number of trailing zeros in a conventional zig-zag scan, due to explicit removal of zero valued coefficients. (Nonetheless, this does not exclude the use of run-level coding in some embodiments of the present invention).

The method may further comprise concatenating the coefficients of the selected subset by scanning them in an order determined by the chosen pattern.

This can lead to further coding efficiency - for example, if the coefficients retained in the pattern are scanned in the order of the expected largest values. The expected order can be similar to that used in conventional zig-zag scanning (lowest frequency first). In general, it may be beneficial if the ordering done depends on any entropy coding steps intended to be applied subsequently to the selected coefficients.

The method may also comprise quantizing the coefficients of the selected subset.

The pattern-based coding scheme can be combined with quantization, to further reduce the quantity of data.

Alternatively, or additionally, quantization may be applied immediately after the DCT, before the pattern is chosen and the corresponding subset of coefficients is selected. Applying quantization before determining which pattern to apply may increase the chances of a given DCT block matching one of the predetermined patterns. For example, at full bit-resolution the DCT block may not exactly match a given pattern. However, when the resolution is reduced by quantization, the quantized coefficients may better match the pattern. Performing quantization after selecting the subset of coefficients has the advantage that the degree of quantization of each coefficient can be adapted to the needs of the pattern in question. This can also take into account the number of coefficients retained in the subset. Thus, for example, a pattern that retains relatively fewer coefficients could use relatively finer quantization on those retained coefficients, to arrive at the same total number of bits per block. In either case, the quantization can be adapted so that perceptually impact of the quantization noise is minimised.

Preferably, each of the predetermined patterns includes a fixed set of low-frequency DCT coefficients common to all said patterns.

This represents a compromise between the more conventional zig-zag scanning which (blindly) prioritises low-frequency coefficients and the adaptive scheme of the basic method described above. Guaranteeing the retention of a fixed low-frequency subset in all patterns can also ensure that any artefacts introduced by the selection (and discarding of the remaining, unselected coefficients) result in minimal perceptual degradation of the picture. It has been observed that human perception of image quality is most disturbed by errors introduced at low frequencies. Therefore it is advantageous to use the adaptive, selective scheme for higher frequency coefficients while always retaining the low frequencies.

When the content of the image block is such that the DCT coefficients exhibit symmetry (whereby there is a group of two or more coefficients in symmetric positions that share substantially equal magnitudes), the chosen pattern can preferably select one coefficient from said group and discard the rest of the group.

For certain patterns, even greater coding efficiency can be obtained by retaining even fewer coefficients. This is based on the observation that certain types of image block content result in symmetric (or anti-symmetric) amplitude patterns in the DCT domain. When content of this type is detected, a pattern can be used which only encodes one coefficient, and discards its counterparts in the symmetric group. For example, if the DCT block is symmetric about its diagonal, the upper triangular part of the matrix might be selected (retained) and the lower part discarded. At the decoder, when this pattern is signalled, the DCT block can be reconstructed by copying the upper triangular coefficients into their corresponding symmetric pairs below the diagonal.

Optionally, the pattern chosen is that pattern which, among all the predetermined patterns, minimises an error metric that measures the difference between the image block and a restored version of the image block reconstructed from the selected subset of coefficients.

In this approach, the image block is encoded by trying all of the patterns in the plurality of predetermined patterns. For each pattern, an error metric is calculated. This quantifies the overall difference between the original image and its representation by the coefficients retained in the given pattern. The pattern which minimises this distortion is then chosen and used for the actual encoding.

Alternatively, or additionally, the choice of pattern may depend on the number of bits needed to encode the block according to the given pattern. In this way, the compression efficiency may be maximised, although the quality of the reconstructed image may be reduced.

Optionally, the pattern may only be chosen if the error metric is below a predetermined threshold value.

For natural images, the DCT coefficients will often not match the predetermined chosen pattern exactly. That is, there will be non-zero coefficients among the remainder that are discarded. This introduces distortion into the reconstructed image (lossy compression). The threshold represents a predetermined level above which the distortion is unacceptable. If the metric is above this threshold, other means should be used to encode the block.

The error metric may be computed based on the DCT coefficients, which may be weighted according to a model of their influence on the perception, by the human visual system, of difference between the image block and the restored version.

The error metric can be based on a model of human perception of image distortions. Some types of distortion will be more visible or disturbing than others. The use of a perceptual metric can then ensure that a pattern is chosen which introduces the least perceptible distortion into the image. Likewise, a threshold set on a perceptual error metric enables a limit to be set above which the distortion is (for example) perceptible, or perceptually unacceptable.

According to another aspect of the invention, there is a method of reconstructing an image block encoded according to any of the methods described above, comprising: inserting the retained, selected subset of coefficients in a DCT block, in accordance with the chosen pattern; replacing with zeros the discarded coefficients; and performing an inverse DCT on the DCT block to produce a restored image block.

This is the converse of the encoding method discussed above. In this reconstruction method, only a subset of the total number of DCT coefficients is received from the encoder. The positions of the subset in the DCT matrix are indicated by the chosen pattern (which is signalled by some other means). Remaining coefficients are padded with zeros.

Also provided is a corresponding method of reconstructing an image block encoded according to a symmetric pattern, as discussed above, this reconstruction method comprising: inserting the retained, selected subset of coefficients in a DCT block, in accordance with the chosen pattern; copying the selected coefficient of said symmetric group to the corresponding symmetric positions in the DCT block, in accordance with the pattern; replacing with zeros the remaining discarded; and performing an inverse DCT on the DCT block to produce a restored image block.

When the pattern used at the encoder has discarded symmetric coefficients in the DCT block, the corresponding reconstruction method at the decoder is to copy the retained coefficients to fill the missing entries in the matrix, according to the predetermined pattern. After the symmetric coefficients have been duplicated in this way, any remaining discarded coefficients are again set to zero.

According to another aspect of the invention there is provided a computer program comprising computer program code means adapted to perform all the steps of any preceding claim when said program is run on a computer.

If the program is run on a computer, the machine readable instructions comprising the computer program cause a processor of the computer to execute the aforementioned methods.

Also provided is such a computer program, embodied on a computer readable medium.

According to a further aspect of the invention there is provided image or video coding apparatus comprising a processor adapted to perform a method of encoding an image block as described above.

Similarly, there is provided image or video decoding apparatus comprising a processor adapted to perform a method of reconstructing an image block as described above.

The invention will now be described, by way of example, with reference to the accompanying drawings in which:

Fig. 1 shows a scan pattern for a DCT block according to the prior art;
Fig. 2 shows a DCT pattern corresponding to checkerboard-type image block content and a scan pattern suitable for collecting the coefficients;
Fig. 3 shows a symmetric DCT pattern in the case of diagonal symmetry in the image block and a scan pattern suitable for collecting the coefficients;
Fig. 4 shows an alternative scan pattern for collecting coefficients in the case of diagonal symmetry;
Fig. 5 shows the symmetric DCT pattern observed in the case of anti-diagonal symmetry in the image block;
Fig. 6 shows a DCT corresponding to an image block having symmetry about a vertical line, and a scan pattern for collecting the coefficients;
Fig. 7 shows an image block comprising vertical frequency content only, and a corresponding DCT and scan pattern;
Fig. 8 shows an image block having central symmetry, and corresponding DCT and scan patterns;
Fig. 9 is a flowchart illustrating an encoding method according to an embodiment;
Fig. 10 is a flowchart illustrating a decoding method according to an embodiment;
Fig. 11 is a flowchart illustrating a decoding method according to another embodiment; and
Fig. 12 is a block diagram of an encoder and decoder operating according to an embodiment.

The inventors have recognised that different types of block content in the image domain can give rise to very different patterns in the frequency (DCT) domain. Thus, coding efficiency or compression ratio can be improved by providing a plurality of different predetermined patterns in the DCT domain, each of which is adapted to be optimal for a given type of image content. As the image is being encoded, the encoder can select the appropriate pattern according to any suitable criterion. For example, the encoder can calculate an error metric between the original, input image block and the block that would be reconstructed according to the each of the DCT patterns. The pattern that provides the lowest residual error is the best suited to encoding the image block. Of course, other criteria, such as the compression ratio, can also be taken into account when deciding which pattern to use for encoding.

The inventors have also realised that it can be beneficial to select a-priori, not only the order in which the coefficients are scanned, but also the actual number of coefficients to maintain. That is, it can be beneficial to select as part of each different, fixed pattern the partial subset of coefficients that will be encoded. This is in contrast to other DCT image and video coding methods, which retain all (non-zero) coefficients, and also need additional bits to code the run-value when each run of zeros is skipped. The selection, in advance, of the number of coefficients that will be encoded in a given coding mode can increase the efficiency of the coding method still further. Fewer coefficients are required to describe the image block in the transform domain.

The inventors have developed a variety of specific patterns, appropriate to particular types of image block content which are encountered in practice. Among these DCT patterns, several exploit a further recognition by the inventors - that certain types of image block lead to symmetric patterns in the DCT domain. Here symmetry refers to a structural property of the DCT for such image blocks which results in multiple DCT coefficients sharing the same (or substantially the same) value. The symmetry may be positive, in the sense that amplitudes are the same, or negative, in the sense that the magnitudes are the same, but the sign (polarity) is inverted. In either case, further gains in coding efficiency are possible by encoding the common magnitude value just once and, at the decoder, using knowledge of the pattern to reconstruct the symmetric counterparts.

Fig. 1 shows a 4x4 DCT block 100, generated from a 4x4 image block. The numbering of the coefficients follows the conventional zig-zag scan path. Thus, coefficient 1 is the DC value, and coefficients 2 to 16 correspond to ("AC") increasing frequencies. In most traditional coding algorithms, the zig-zag scan is intended to collect a small number of larger magnitude coefficients at the start of the scan path, and a series of low- or zero-magnitude coefficients at the tail. This is based on the premise that, on average, natural images show a monotonically decreasing characteristic with increasing frequency, and most energy is concentrated around the DC value.

Although the basic coding method described above is efficient, on average, for a wide variety of video material, some types of video content (especially graphics images) have such different characteristics that the coding method above is far from efficient. Graphics, which can include computer animations, cartoons, logos and text (for example) are often characterized by more and sharper stepwise transitions in luminance and chrominance. These are ill-suited to conventional DCT encoding, because they give rise to significant high-frequency energy.

For example, graphics containing repeating (checkerboard) patterns or sharp edges typically do not result in a DCT coefficient matrix in which all (large) non-zero coefficients are clustered in the upper-left corner. This leads either to a low compression ratio or to high amount of quantization and thus to visible artefacts. Therefore, such patterns should be encoded differently.

A 2D DCT on a 4x4 pixel block containing a checker board pattern results in a DCT matrix with predictable properties. Figure 2 depicts three example checkerboard patterns: surprisingly, all three patterns result in a similar structure in the 2D-DCT matrix, as shown. There is a significant DC component (+) and four other non-zero frequency coefficients (x). The rest of the coefficients are zero (0). Furthermore, such matrices may show symmetry over the diagonal axis from top-left to bottom-right. Thus, the coefficients above the diagonal can be predicted using those below.

Figure 2 demonstrates that the zig-zag scan is not the proper way to collect the non-zero coefficients for such DCT matrices. The run value will consume bits, which can be avoided if a different scan path is applied.

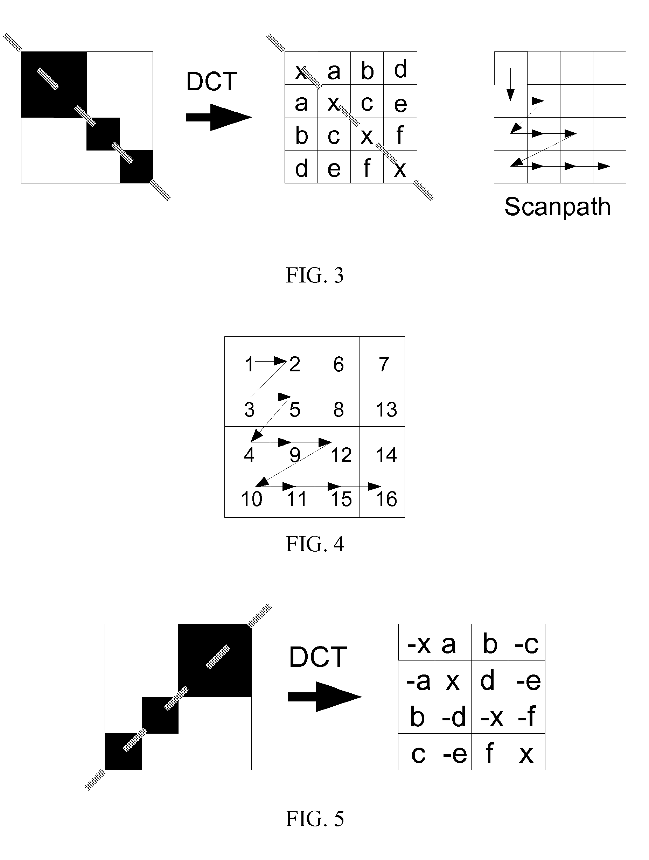

Other patterns in the spatial domain result in a DCT matrix with other predictable characteristics. Fig. 3 and Figs. 5-8 indicate some patterns in the spatial domain and their representation in the DCT domain. Each DCT representation has a distinctive pattern which, moreover, may also be symmetric.

According to embodiments of the invention, the DCT characteristics depicted in the drawings are used to define scan paths that collect the DCT coefficients in an efficient way.

For graphics content, well-defined patterns in the DCT domain often occur precisely. In natural video however, precise fulfilment of these DCT patterns is less likely. Due to the random nature of the scene content, as well as camera-related factors such as noise, focus- and motion-blur, the symmetry or other patterns will only be satisfied approximately. In spite of this, it can still be beneficial to enforce the patterns when encoding the DCT. The amount of symmetry that can be enforced depends heavily on the original video content and on the masking characteristics of the Human Visual System (HVS). Exploiting symmetry coding of this kind in the video domain can result in higher compression ratios, or may provide comparable distortion or higher picture quality at equal compression rates.

When a transformed video block contains a given pattern, certain columns in the DCT domain are known to be zero. As a result, the scan path can be adapted to skip these zero positions, making the DCT matrix effectively smaller. This results in shorter run values, or even the absence of those run values (if all remaining coefficients are non-zero).

Fig. 3 indicates the situation where there is symmetry along the oblique axis (the axis from top-left to bottom-right). The axis of symmetry is indicated by the dashed line. When this type of symmetry is present, the coefficients located in the upper right corner a, b, c, d, e and f are equal to the coefficients in the lower left corner (indicated by the same characters). The example of Fig. 3 often occurs in graphics. Fig. 3 also shows a scan path (scan pattern) which can be used to concatenate the relevant subset of coefficients in a suitable order. This traverses those coeffcients on (x), and below (a-f), the main diagonal. The pattern broadly follows a path of increasing frequency, starting from the DC value.

The Human Visual System (HVS) is more sensitive to variations at low frequency. To avoid losing information (and introducing variations) in the low-frequency part, the coefficients at positions "a" in the DCT matrix should preferably be preserved exactly, so that symmetry is only exploited on the remaining coefficients (b-f). In other words, the pattern may be adapted such that a fixed subset of lower-frequency coefficients is always retained. This applies to all patterns - not just the diagonal-symmetric pattern of Fig. 3.

In the present example, this has a marginal influence on the scan path depicted in Fig. 3. Fig. 4 indicates the modified scan path which only leaves out the coefficients at positions 6, 7, 8, 13 and 14. The low-frequency energy, which largely determines the appearance of the 4x4 image block, is preserved.

For symmetry about the other diagonal (top-right to bottom-left), referred to as anti-diagonal symmetry, the pattern in the DCT domain is that shown in Fig. 5. Here, coefficients a, c, d, and f alternate in sign with respect to their symmetric counterparts. Nonetheless, the same coding efficiency can be obtained, because it is still only necessary to retain the lower (or upper) triangular part of the matrix. Scan paths identical to those shown in Figs. 3 and 4 can be used. A priori, it is not possible to indicate the sign of a particular coefficient. The relevant coefficients (a, c, d, and f) of the mirror part of Fig. 5 are reconstructed by copying the value but with inverted sign. As will be readily apparent to the skilled person, all available knowledge about the structure of the coefficients in the pattern should be used, so that the pattern itself defines the common characteristics of the block as completely as possible. In this way, the amount of detail that needs to be encoded for specific instances of the pattern can be minimised.

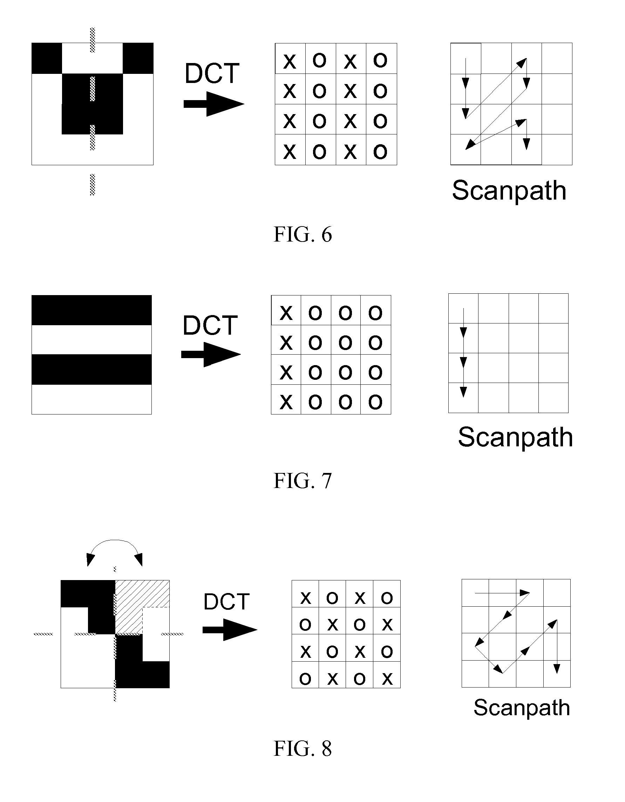

Fig. 6 illustrates the case of horizontal symmetry (left-right symmetry). Here the DCT block is characterised by two columns of non-zero coefficients and two columns of zero-valued coefficients. Thus, only half of the coefficients need to be encoded when this pattern is satisfied. The example scan pattern shown once again follows the path of increasing frequency. Besides a different scan path, the quantization should preferably be done in a way that deviates from the traditional quantization strategy (which would quantize higher frequencies more aggressively).

In Fig. 7, the image block comprises only horizontally-oriented image structure. This leads to a single column of non-zero DCT coefficients, corresponding to the vertical frequency axis. Here just a quarter of the coefficients need to be retained.

The image block depicted in Fig. 8 has central symmetry about its centre. In this case, the DCT has a checkerboard pattern. Again, only half the coefficients are non-zero and only these need be retained. The example scan pattern shown is a modified version of the traditional zig-zag scan, skipping the zero-valued diagonals.

Note that transposed versions of the image patterns shown will give rise to transposed patterns in the DCT domain. Therefore, the skilled person will be readily able to derive other suitable patterns. For example, with reference to Figs. 6 and 7, it is possible to derive a scan path corresponding to vertical symmetry (symmetry about a horizontal line) and a scan path for vertical image structures (having no non-zero vertical frequency components).

Note that the scope of the invention is not limited to the exemplary patterns shown in the drawings and described here. Other patterns may be derived. For example, one very simple pattern may consist of retaining only the DC coefficient and discarding all AC coefficients from the DCT block.

As mentioned above, for graphics content, such as the example image blocks discussed above, the regular and/or symmetric patterns in the DCT domain are satisfied exactly - that is, a set of coefficients is exactly zero. In this case, lossless coding is possible, despite discarding a subset of coefficients (assuming quantization is not used). Thus, lossless compression is achievable for well defined patterns. Such lossless compression of graphics content is desirable, for example, for providing wireless communication of a display signal from a computer to a Liquid Crystal Display (LCD) screen or any other type of monitor.

For natural video, the patterns can still be exploited to advantage. However, it is unlikely that the patterns would ever be satisfied exactly for a block of natural content and so the discarded DCT coefficients will not be exactly zero. This results in a loss of information, as occurs with the introduction of quantization noise in conventional DCT-based coding schemes.

To determine the amount of information loss, one of a number of error metrics can be used. For example, the Sum of Absolute Difference (SAD) can be used as a metric. This accumulates the absolute difference between the original DCT coefficients, and the values that can be reconstructed from the coefficients retained according to the pattern. The SAD (or another suitable error metric) can be used to choose the DCT pattern most appropriate to any given image block. For each such block, the SAD is evaluated using the set of predetermined patterns (for example, those shown in Figs. 3-8) and the pattern that provides the lowest value is chosen to encode the block. To compare the SAD values of the block for each pattern, the coefficients may be weighted a priori.

Specific examples of the calculation of the SAD for particular patterns will now be provided. In each case, the metric measure the total absolute amplitude of the coefficients discarded when enforcing the given pattern or symmetry.

For the diagonal symmetry of Fig. 3, the SAD reduces to:

$$\text{SAD} = \sum_{i=j+1}^{N-1} \sum_{j=0}^{N-1} \left| x(i,j) - x(j,i) \right|$$

for an NxN DCT block, where x(i,j) refers to the coefficient on row j, in column i.

For anti-diagonal symmetry, as illustrated by Fig. 5, the corresponding expression is:

$$\text{SAD} = \sum_{i=j+1}^{N-1} \sum_{j=0}^{N-1} \Big| \, \big| x(i,j) \big| - \big| x(j,i) \big| \, \Big|$$

For the central symmetry of Fig. 8, the expression is:

$$\text{SAD} = \sum_{i=0}^{\left(\frac{N-1}{2}\right)} \sum_{j=0}^{N-1} \big| x(2i+1-(j \bmod 2), j) \big|$$

For the horizontal symmetry of Fig. 6, we have:

$$\text{SAD} = \sum_{i=0}^{\left(\frac{N-1}{2}\right)} \sum_{j=0}^{N-1} \big| x(j, 2i+1) \big|$$

Meanwhile, for the horizontal image stripes of Fig. 7 (horizontal uniformity), it is:

$$\text{SAD} = \sum_{i=1}^{N-1} \sum_{j=0}^{N-1} \big| x(i,j) \big|$$

As will be apparent to those skilled in the art, these error metric definitions must be modified if a common subset of low-frequency coefficients is taken into account for all patterns.

The error metric can also be used to determined whether or not to enforce a pattern which is not satisfied precisely. If the SAD (for example) is below a certain threshold, symmetry is enforced (or assumed) resulting in a reduced number of coefficients to be transmitted. If it is above the threshold, either another pattern is used, or the algorithm reverts to a standard coding mode, in which all the coefficients are retained.

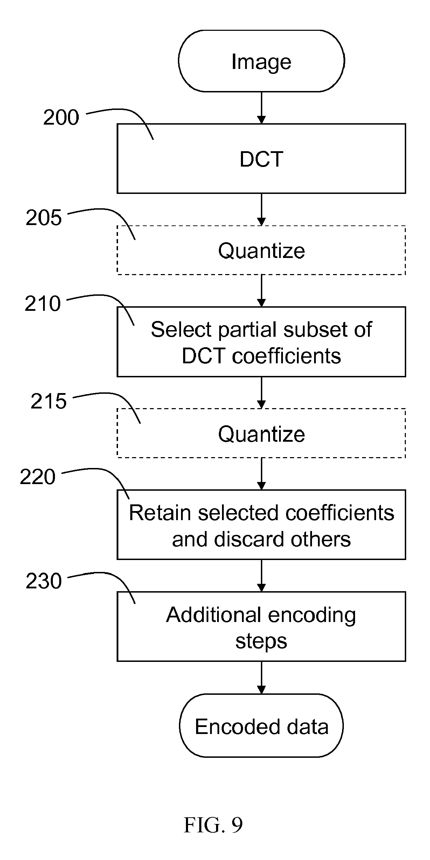

Fig. 9 is a flowchart of a method of encoding an image block according to an exemplary embodiment. In step 200, the input image block is transformed by a Discrete Cosine Transform, producing a block (matrix) of DCT coefficients, as discussed previously. The most appropriate or efficient pattern for encoding the DCT block is determined, according to the SAD error metric. Using the chosen predetermined pattern, a subset of the DCT coefficients is selected. These are ordered using a scan path associated with the chosen pattern and concatenated, in step 220. The remaining, unselected coefficients are discarded. The retained, selected coefficients can then be encoded and packaged for delivery to the decoder, in step 230. Suitable methods will be readily apparent to one skilled in the art. These additional encoding steps 230 may include further source coding, such as run-length or run-level encoding, or entropy coding. The encoded representation of the image block is then communicated to a decoder by any suitable means. For example, the encoded content may be broadcast and received at a receiver, or recorded on a storage medium, such as a non-volatile optical storage medium.

Optionally, the process includes one or more quantization steps, illustrated by the dashed boxes of Fig. 9. The first quantization step 205 operates on all the coefficients, before determination of the best pattern and selection of the associated predetermined subset of coefficients. This quantization step may influence the choice of pattern. The second quantization step 215 is performed after the pattern has been determined and the subset of coefficients selected. This quantization step can adapt the coefficient quantization specifically for the specific pattern in question. These two quantization steps may be used alternatively or in combination.

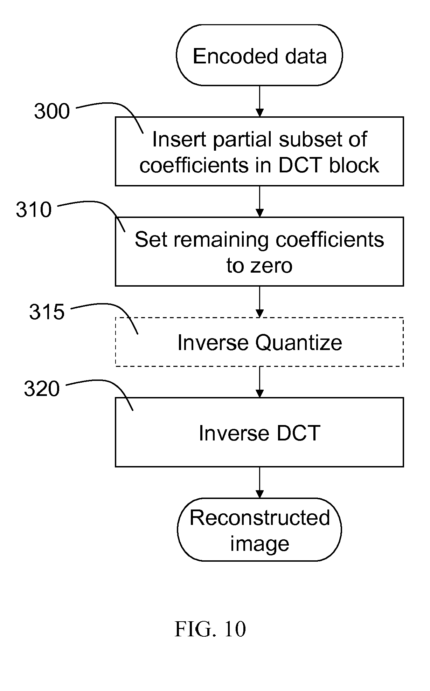

Fig. 10 illustrates the operations carried out at a decoder, to reconstruct an image block compressed using an embodiment as described above. According to the reconstruction method of one embodiment, the encoded data is received or input and the DCT coefficients recovered. The recovered partial subset of coefficients is inserted in the corresponding subset of positions in an empty DCT matrix (step 300). The correct positions are known to the decoder by reference to the pattern that was used for encoding. The choice of pattern that has been used for each block is signalled in the encoded data generated by the encoder. However, the patterns themselves do not need to be transmitted, since they are determined in advance. Once the retained coefficients have been inserted into the relevant places in the DCT block, the remaining coefficients are set to zero (310). Finally, an inverse DCT is performed (320) on the reconstituted DCT block, to reconstruct the image block. Note that if quantization steps (205, 215) have been performed at the encoding stage, a corresponding inverse quantization step is performed (315) in the reconstruction process.

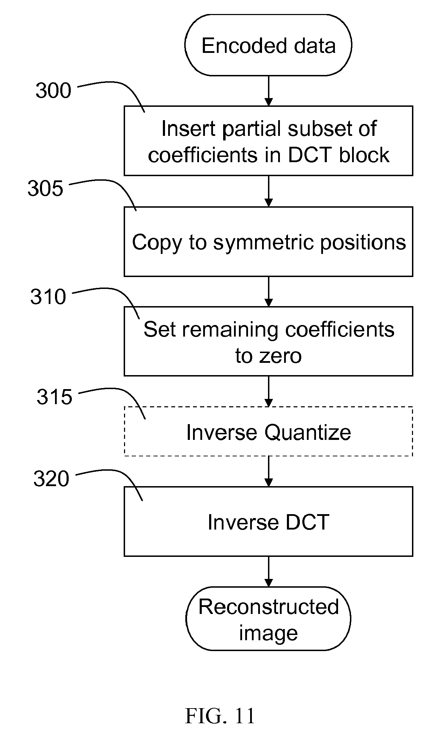

Fig. 11 is a flowchart of a decoding method according to another embodiment, which is suitable when the DCT coefficients have been encoded by exploiting symmetry. In the reconstruction method of this embodiment, an extra step is included, to restore the discarded symmetric coefficients. The retained partial subset of coefficients is inserted in the blank DCT block in step 300, as before. Then, the DCT coefficients which have symmetric counterparts are copied to their corresponding symmetric positions, in step 310. Only then is the DCT block padded with zeros (step 310). The inversion of the DCT (320), and optional inverse quantization (315), are performed as before. Note that, in the step 305 of copying the symmetric DCT coefficients, it may be necessary to invert some or all of them. This is determined by the pattern in which they have been encoded. For example, with reference to Fig. 5, the coefficients a, c, f, and d must be inverted, when copying them to their respective symmetric positions. As discussed above, it is important that coefficients are restored with the correct polarity (sign). For coefficients that vary in polarity, the sign will be encoded with the coefficient. For coefficients that are constant in polarity (like d in Fig. 5), the pattern defines the correct sign for the restored coefficients.

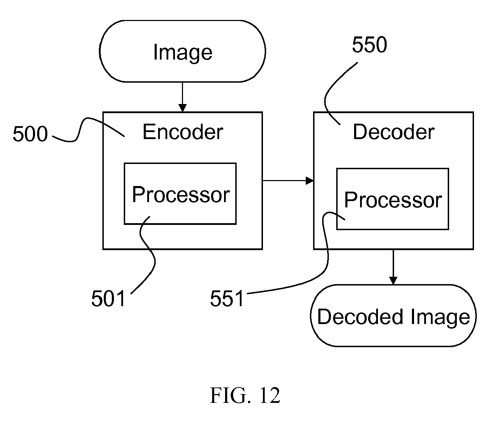

Fig. 12 shows a block diagram of a typical logical (hardware or software) system operating according to an embodiment of the invention. Encoder 500 receives an image, which it encodes by means of processor 501, operating according to an encoding method of the invention. The encoded data is communicated to decoder 550, which decodes it according to a reconstruction method of the invention. The processor 551 at the decoder 550 is adapted for this purpose.

Experiments with embodiments of the invention show promising results: quality metrics such as Peak Signal to Noise Ratio (PSNR) show little picture quality degradation when symmetry is enforced. Moreover, a metric that measures the degree of blurring improves when compared to a conventional coding method at the same compression ratio.

Traditional DCT coding schemes use predetermined scan paths to encode all coefficients. An important aspect of such a scan path is that all DCT coefficients are taken into account. Methods according to embodiments of the present invention use pattern and symmetry recognition (especially in the DCT domain) and correspondingly modified scan paths to encode video more efficiently. As a result, certain DCT coefficients, depending on the pattern, are disregarded.

While the invention has been illustrated and described in detail in the drawings and foregoing description, such illustration and description are to be considered illustrative or exemplary and not restrictive; the invention is not limited to the disclosed embodiments.

For example, it is possible to operate the invention in an embodiment wherein an error metric other than SAD is used to compare the efficiency of different predetermined patterns for coding a particular block. A variety of other metrics will be known to persons skilled in the art, including, but not limited to variance or minimum mean square error (MMSE); and entropy measures. Different error metrics will provide different qualitative results. For example, error metrics based on squared (or higher power) difference terms will penalise small numbers of coefficients having large amplitude differences relatively more than a greater number of small-amplitude differences.

As already noted above, lossless embodiments of the encoding methods of the invention may be particularly beneficial for graphics-type images or video sequences. For natural images and video, as discussed, a threshold can be applied to the error metrics, to establish when it is "safe" to enforce a particular pattern. In this case, it may be preferable to use an error metric which incorporates a model of the response of the Human Visual System (HVS) to particular types of distortion. When encoding, this enables the system to choose the DCT pattern that will be perceived by the HVS as introducing minimum apparent distortion. For example, human perception is more sensitive to certain frequency sub-bands (corresponding to particular DCT coefficients) than others. If the error metric weights the DCT coefficients in accordance with a model of this sensitivity, its choices of pattern may better match the requirements of human perception. Ideally, even though information is being discarded (lossy compression, in the information theoretic sense), the visual impact is negligible - so called "visual lossless" compression.

Other perceptual error metrics can take into account masking effects on the HVS. For example, the sensitivity of the HVS to a given frequency subband may change depending on the average grey-level in the image block. This can be accommodated by modifying the weighting of the higher frequency DCT coefficients, based on the value of the DC coefficient. Similarly, it may be possible to exploit the masking effect of intensity discontinuities (for example, edges) on spatial frequency components of lower energy, in the neighbourhood of the discontinuity.

In still other embodiments, it may be possible or beneficial to choose the pattern best matching a given image block in the image domain (instead of using the error metric in the DCT domain). In this case, it may be possible to avoid the need to compute the zero-valued DCT coefficients at all, or to avoid the duplicated calculation of symmetric coefficients.

It is of course possible to combine the pattern-based compression principles of the invention with conventional quantization techniques, to further enhance compression ratios (at the expense of noise, as is usual).

Likewise, within the scope of the pattern-based compression described, it may still be beneficial to apply techniques such as run-level encoding. For example, this could help to reduce the number of bits needed for coding when a sequence of zero-valued coefficients is found on the scan path defined by one of the predetermined patterns.

The embodiments of the invention described above were relevant primarily to coding of still images and to intra-frame coding of video. However, other similar embodiments can be applied to inter-frame, or motion compensated, video coding. Conventional inter-frame coding methods perform a DCT on the motion-compensated frame difference, and it is possible to apply the methods of the present invention to this difference data, just as for normal image data.

Although the invention has been described using the examples of 4x4 DCT blocks, it is no less applicable to 8x8 or other sized DCT blocks.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. A method of encoding an image block comprising:

   performing a Discrete Cosine Transform, hereinafter DCT, on the image block to produce a set of DCT coefficients;
   selecting a subset of the coefficients according to a pattern chosen from a plurality of predetermined patterns, the choice of pattern depending upon the content of the image block; and
   retaining the selected subset of coefficients and discarding all other coefficients.

2. The method of claim 1, further comprising concatenating the coefficients of the selected subset by scanning them in an order determined by the chosen pattern.

3. The method of claim 1 or claim 2, further comprising quantizing the DCT coefficients before the pattern is chosen and the subset of coefficients is selected.

4. The method of any of claims 1 to 3, further comprising quantizing the coefficients of the selected subset.

5. The method of any preceding claim, wherein each of the predetermined patterns includes a fixed set of low-frequency DCT coefficients common to all said patterns.

6. The method of any preceding claim, wherein:

   the content of the image block is such that the DCT coefficients exhibit symmetry, whereby there is a group of two or more coefficients in symmetric positions that share substantially equal magnitudes; and
   the chosen pattern selects one coefficient from said symmetric group and discards the rest of the group.

7. The method of any preceding claim, wherein the pattern chosen is that which, among all the predetermined patterns, minimises at least one of:

   an error metric that measures the difference between the image block and a restored version of the image block reconstructed from the selected subset of coefficients; and
   the number of bits needed to encode the image block.

8. The method of claim 7, wherein the pattern is only chosen if the error metric is below a predetermined threshold value.

9. The method of claim 7 or claim 8, wherein the error metric is computed based on the DCT coefficients, which are weighted according to a model of their influence on the perception, by the human visual system, of a difference between the image block and the restored version.

10. A method of reconstructing an image block encoded according to the method of any preceding claim, comprising:

inserting the retained, selected subset of coefficients in a DCT block, in accordance with the chosen pattern; replacing the discarded coefficients with zeros; and performing an inverse DCT on the DCT block to produce a restored image block.

11. A method of reconstructing an image block encoded according to the method of claim 6, comprising:

inserting the retained, selected subset of coefficients in a DCT block, in accordance with the chosen pattern; copying the selected coefficient of said symmetric group to the corresponding symmetric positions in the DCT block, in accordance with the pattern; replacing the remaining coefficients with zeros; and performing an inverse DCT on the DCT block to produce a restored image block.

12. A computer program comprising computer program code means adapted to perform all the steps of any preceding claim when said program is run on a computer.

13. A computer program as claimed in claim 12, embodied on a computer readable medium.

14. Image or video coding apparatus comprising a processor adapted to perform a method according to any of claims 1 to 9.

15. Image or video decoding apparatus comprising a processor adapted to perform a method according to claim 10 or claim 11.

100

FIG. 1

Scanpath

DCT

100

FIG. 2

FIG. 3

FIG. 4

FIG. 5

FIG. 6

FIG. 7

FIG. 8

```
                          ╭──────────────╮
                          │    Image      │
                          ╰──────┬───────╯
                                 │
                                 ▼
        200 ┌──────────────────────────────────────┐
            │                 DCT                    │
            └──────────────────┬───────────────────┘
                                 │
                                 ▼
        205 ┌- - - - - - - - - - - - - - - - - - - -┐
            ╎               Quantize                 ╎
            └- - - - - - - - - -┬- - - - - - - - - - ┘
                                 │
                                 ▼
        210 ┌──────────────────────────────────────┐
            │        Select partial subset of        │
            │           DCT coefficients             │
            └──────────────────┬───────────────────┘
                                 │
                                 ▼
        215 ┌- - - - - - - - - - - - - - - - - - - -┐
            ╎               Quantize                 ╎
            └- - - - - - - - - -┬- - - - - - - - - - ┘
                                 │
                                 ▼
        220 ┌──────────────────────────────────────┐
            │      Retain selected coefficients      │
            │           and discard others           │
            └──────────────────┬───────────────────┘
                                 │
                                 ▼
        230 ┌──────────────────────────────────────┐
            │          Additional encoding           │
            │                steps                   │
            └──────────────────┬───────────────────┘
                                 │
                                 ▼
                          ╭──────────────╮
                          │ Encoded data  │
                          ╰──────────────╯
```

FIG. 9

FIG. 10

FIG. 11

FIG. 12

Europäisches
Patentamt

European
Patent Office

Office européen
des brevets

# EUROPEAN SEARCH REPORT

Application Number

EP 09 16 1255

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 768 415 A (MATSUSHITA ELECTRIC IND CO LTD [JP]) 28 March 2007 (2007-03-28) <br> * paragraphs [0060], [0061], [0064], [0065], [0070], [0074], [0088] * <br> * figures 4,5,8,9 * | 1-15 | INV. <br> H04N7/26 |
| X | US 6 914 939 B1 (BOICE CHARLES E [US] ET AL) 5 July 2005 (2005-07-05) <br> * section 1.3, column 11 * <br> * section 1.4, column 12 * <br> * equations 2-11 * <br> * figures 1,4 * | 1-15 | |
| A | WIEGAND T ET AL: "Rate-constrained coder control and comparison of video coding standards" <br> IEEE TRANSACTIONS ON CIRCUITS AND SYSTEMS FOR VIDEO TECHNOLOGY, IEEE SERVICE CENTER, PISCATAWAY, NJ, US, <br> vol. 13, no. 7, 1 July 2003 (2003-07-01), pages 688-703, XP011099260 <br> ISSN: 1051-8215 <br> * section III.A * | 7 | |
| A | RUBINO E M ET AL: "IMPROVED CHEN-SMITH IMAGE CODER" <br> JOURNAL OF ELECTRONIC IMAGING, SPIE / IS & T, <br> vol. 4, no. 2, 1 April 1995 (1995-04-01), pages 151-160, XP000511409 <br> ISSN: 1017-9909 <br> * section 3.3 * | 9 | TECHNICAL FIELDS SEARCHED (IPC) <br><br> H04M <br> H04N <br> G06G <br> G06T |
| X | US 5 552 829 A (KIM KYE J [KR] ET AL) 3 September 1996 (1996-09-03) <br> * page 5, lines 1-38 * <br> * page 7, lines 37-44 * <br> * figures 5-7,12 * | 1,2,4, 10,12,14 | |

-/--

| The present search report has been drawn up for all claims | | |
|---|---|---|
| Place of search <br> The Hague | Date of completion of the search <br> 22 January 2010 | Examiner <br> Ferré, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 09 16 1255

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 577 363 A (LORAL AEROSPACE CORP [US]) 5 January 1994 (1994-01-05) * page 8, lines 25-34; figure 2 * ----- | 1,2,4,5, 12,14 | |
| X | US 7 426 311 B1 (CHUN SUNG MOON [KR] ET AL) 16 September 2008 (2008-09-16) * page 4, lines 46-56 * * page 9, line 52 - page 10, line 19 * * page 10, lines 20-58 * ----- | 1,2,4, 10,12,14 | |
| | | | TECHNICAL FIELDS SEARCHED (IPC) |

The present search report has been drawn up for all claims

| Place of search | Date of completion of the search | Examiner |
|---|---|---|
| The Hague | 22 January 2010 | Ferré, Pierre |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 09 16 1255

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2010

| Patent document cited in search report | | Publication date | Patent family member(s) | | Publication date |
|---|---|---|---|---|---|
| EP 1768415 | A | 28-03-2007 | NONE | | |
| US 6914939 | B1 | 05-07-2005 | NONE | | |
| US 5552829 | A | 03-09-1996 | JP | 2530090 B2 | 04-09-1996 |
| | | | JP | 7075132 A | 17-03-1995 |
| EP 0577363 | A | 05-01-1994 | CA | 2097951 A1 | 31-12-1993 |
| | | | DE | 69320117 D1 | 10-09-1998 |
| | | | DE | 69320117 T2 | 22-04-1999 |
| | | | JP | 3182260 B2 | 03-07-2001 |
| | | | JP | 6224769 A | 12-08-1994 |
| | | | US | 5289548 A | 22-02-1994 |
| US 7426311 | B1 | 16-09-2008 | NONE | | |

EPO FORM P0459

For more details about this annex : see Official Journal of the European Patent Office, No. 12/82